(19) Europäisches Patentamt / European Patent Office / Office européen des brevets

(11) **EP 1 444 700 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(51) Int Cl.:
*G11C 29/00* *(2006.01)*

(21) Anmeldenummer: **02779192.0**

(86) Internationale Anmeldenummer:
**PCT/DE2002/004046**

(22) Anmeldetag: **30.10.2002**

(87) Internationale Veröffentlichungsnummer:
**WO 2003/043022 (22.05.2003 Gazette 2003/21)**

(54) **SPEICHERTEST**

MEMORY UNIT TEST

CONTROLE D'UNITES DE MEMOIRE

(84) Benannte Vertragsstaaten:
**AT CH DE ES FR GB LI**

(30) Priorität: **12.11.2001 DE 10155531**
**14.02.2002 DE 10206189**

(43) Veröffentlichungstag der Anmeldung:
**11.08.2004 Patentblatt 2004/33**

(73) Patentinhaber: **SIEMENS AKTIENGESELLSCHAFT**
**80333 München (DE)**

(72) Erfinder:
• **MERCHANT, Kamal**
**91058 Erlangen (DE)**
• **MAYER, Frank**
**91080 Erlangen (DE)**

(56) Entgegenhaltungen:
EP-A- 0 643 350        EP-A- 1 178 321
WO-A-98/09218          DE-A- 2 655 653
DE-C- 3 635 012

• "ERROR DETECTION METHOD FOR RAM WITH STUCK OUTPUT LATCHES" IBM TECHNICAL DISCLOSURE BULLETIN, IBM CORP. NEW YORK, US, Bd. 33, Nr. 7, 1. Dezember 1990 (1990-12-01), Seiten 157-158, XP000108396 ISSN: 0018-8689
• PATENT ABSTRACTS OF JAPAN vol. 015, no. 196 (P-1203), 21. Mai 1991 (1991-05-21) & JP 03 048347 A (FUJITSU LTD), 1. März 1991 (1991-03-01)

**Beschreibung**

Die Erfindung betrifft ein Verfahren sowie eine Vorrichtung zum Testen und/oder Betreiben von Halbleiterspeichern mit Speicherzellen.

Die Erfindung betrifft ein Verfahren sowie eine Vorrichtung zum Testen und/oder Betreiben von Halbleiterspeichern mit Speicherzellen, insbesondere von Speichern in fehlersicheren Systemen, welche ohne Unterbrechung für eine längere Zeit arbeiten. Bei diesen fehlersicheren Systemen müssen Hardwarefehler üblicherweise im laufenden Betrieb erkannt werden.

Speicher für binäre Signale gehören zu den wichtigsten Funktionseinheiten digitaler informationsverarbeitender Systeme. Sie finden u. a. als Programm- und Datenspeicher in Digitalrechnern, Messgeräten, als Code-Wandler und allgemein zur Realisierung kombinatorischer logischer Schaltungen Verwendung. Ein digitaler Speicher ist eine Anordnung mehrerer Speicherzellen, die so organisiert sind, dass von außen zu jeder Speicherzelle Zugriff besteht. In einem sogenannten wortorganisierten Speicher können alle Bits eines Wortes gleichzeitig adressiert und parallel gelesen oder eingeschrieben werden. Bei einem k-Bit-Wort werden somit sämtliche k Bits eines Wortes als eine Speicherzelle betrachtet. Sofern nichts anderes gesagt wird, wird im Folgenden unter einer Speicherzelle stets ein k Bit breites Wort verstanden. Bei Adressierung von nur jeweils einem Bit spricht man von Bitorganisation.

Die ältere Anmeldung DE 100 37 992 beschreibt ein Online-Testkonzept, bei welchem die Hardware während des Betriebs in regelmäßigen Zeitintervallen blockweise getestet wird. Hierfür werden Zeitintervalle vordefiniert, in denen die Hardware zyklisch getestet wird und anschließend der ursprüngliche Zustand wiederhergestellt wird, bevor der Funktionsbetrieb fortgesetzt wird. Das beschriebene Konzept erlaubt u. a. einen Onlinetest von Zustandsmaschinen (FSM = Finite State Machine) sowie von sogenannter Random-Logik.

Die WO 98/09218 beschreibt ein Speichersystem, in welchem zusammen mit einem Datenwort jeweils ein Kontrollwort abgespeichert wird. Das Speichersystem weist ein Fehlerüberwachungssystem auf, das das genannte Kontrollwort gemäß einem bestimmten Bildungsgesetz aus dem einzuschreibenden Datenwort und der Schreibadresse erzeugt, bevor das Kontrollwort gemeinsam mit dem einzuschreibenden Datenwort unter der genannten Schreibadresse abgespeichert wird, und das anhand eines aus dem Speichersystem auszulesenden Datenwort gemäß dem Bildungsgesetz erneut ein Kontrollwort erzeugt, die Bits des Kontrollwerts mit den zum Datenwort abgespeicherten Bits vergleicht und bei Ungleichheit aus dem Muster der gleichen und ungleichen Bits, dem sogenannten Syndrommuster, auf die Art des Fehlers schließt. Dabei wird vor dem Abspeichern eines einzuschreibenden Datenwortes unter dessen Schreibadresse ein interner Lesevorgang durchgeführt, bei dem das Fehlerüberwachungssystem die Fehlerprüfung gemäß dem zweiten Merkmal durchführt.

Der Erfindung liegt die Aufgabe zugrunde, einen zeitsparenden Test von Halbleiterspeichern während des laufenden Betriebs zu ermöglichen.

Diese Aufgabe wird durch ein Verfahren mit den in Anspruch 1 angegebenen Merkmalen gelöst.

Diese Aufgabe wird weiterhin durch eine Vorrichtung mit den in Anspruch 12 angegebenen Merkmalen gelöst.

Die Erfindung beruht auf der Erkenntnis, dass durch relativ einfache schaltungstechnische Maßnahmen die Effektivität eines Speichertests mittels Einsatz eines variablen Parameters zur Bildung einer Prüfinformation zu Speicherzellen wesentlich erhöht werden kann. Das erfindungsgemäße Verfahren bzw. die erfindungsgemäße Vorrichtung erlauben die Erkennung von Fehlern bei den Vorgängen Adressieren, Schreiben, Speichern und Lesen. Im Gegensatz zu bisher bekannten Speichertests ist der zeitliche Testaufwand proportional zur Anzahl der Speicherzellen n multipliziert mit $m = \log_2 n$ und steigt nicht quadratisch mit dem Adressraum n an. Bei zunehmender Speichergröße lässt sich der erfindungsgemäße Algorithmus sehr gewinnbringend einsetzen, da der zeitliche Testaufwand im Vergleich zu bisherigen Verfahren mit der Zunahme des Speichers stark abnimmt, Adressierfehler aber trotzdem erkannt werden.

In einer vorteilhaften Ausgestaltung der Erfindung wird der Speichertest in mehreren Testzyklen durchgeführt. Für eine effektive Fehlererkennung, insbesondere für die Erkennung von Adressierfehlern, wird vorgeschlagen, jeweils in einer ersten Phase eines Testzyklus einen Basistest über sämtliche Speicherzellen durchzuführen. Beim Basistest wird jeweils der Inhalt der Speicherzellen gelesen und werden die Speicherzellen mit diesem Inhalt jeweils erweitert um eine erste Prüfinformation wieder beschrieben, wobei diese erste Prüfinformation in Abhängigkeit von einem der jeweiligen Speicherzelle zugeordneten variablen Parameter und dem zuvor gelesenen Inhalt der jeweiligen Speicherzelle gebildet wird. In einer zweiten Phase des Testzyklus, nachdem alle Speicherzellen entsprechend der ersten Phase gelesen und wieder beschrieben wurden, wird der Inhalt der Speicherzellen wiederum gelesen, eine zweite Prüfinformation aus diesem in der zweiten Phase gelesenen Inhalt bestimmt und die zweite Prüfinformation mit der gespeicherten ersten Prüfinformation verglichen.

Die erste Phase des erfindungsgemäßen Speichertests kann vorteilhafterweise auch dazu genutzt werden, Speicherzellen zur Erkennung von Fehlern bei den Vorgängen Schreiben, Lesen und Speichern zu beschreiben und zu lesen, insbesondere zur Erkennung von Koppelfehlern innerhalb einer Speicherzelle (sogenannte horizontale Koppelfehler). Der Speicher wird wieder in den gleichen Zustand versetzt, den er vor dem Speichertest hatte, wenn gemäß einer weiteren Ausgestaltung der Erfindung am Ende eines Basis-Testzyklus des Basistests die Speicherzellen jeweils mit dem in der ersten Phase gelesenen Inhalt beschrieben werden.

Der oben genannte einer Speicherzelle zugeordnete variable Parameter wird als variable Parität ausgebildet. Die Parität stellt die einfachste und was die Informationsrate anbelangt die effektivste Codierung dar. Mit der Parität lassen sich die Einbitfehler zu hundert Prozent erkennen. Ist der variable Parameter als variable Parität ausgebildet, dann wird als erste Prüfinformation ein zusätzliches Bit (ein sogenanntes Paritätsbit) in Abhängigkeit von der der jeweiligen Speicherzelle zugeordneten variablen Parität und in Abhängigkeit vom Inhalt der jeweiligen Speicherzelle gebildet. Das Paritätsbit wird so gebildet, dass die Gesamtzahl der Eins-Bits des Inhalts der jeweiligen Speicherzelle ergänzt um das Paritätsbit gerade (bei gerader variabler Parität) oder ungerade (bei ungerader variabler Parität) ist. Die Speicherzelle wird in der ersten Phase mit dem Inhalt erweitert um das Paritätsbit beschrieben. In der zweiten Phase wird aus dem wiederum gelesenen Inhalt der Speicherzellen eine zweite Prüfinformation bestimmt, welche bei Verwendung einer variablen Parität als variables Paritätsbit ausgebildet ist, d. h. als Information, ob die Gesamtzahl der Eins-Bits des in der zweiten Phase gelesenen Inhalts gerade oder ungerade ist.

Das erfindungsgemäße Verfahren kann insbesondere zur Erkennung von Koppelfehlern eingesetzt werden, wobei ein Koppelfehler durch die fehlerhafte Zuordnung einer oder mehrerer Speicherzellen zu einer Speicheradresse gekennzeichnet ist. Koppelfehler lassen sich besonders einfach erkennen, wenn eine einer Anzahl von Adressbits der binär dargestellten Speicheradresse entsprechende Anzahl von Testzyklen vorgesehen ist und in jedem Testzyklus jeweils ein anderes Adressbit zur Bildung einer variablen Prüfinformation bzw. variable Parität verwendet wird. Um auch Fehler zu erkennen, bei denen die gekoppelte Speicherzelle eine höhere Adresse als die Koppelzelle hat, wird vorgeschlagen, dass in einem ersten Abschnitt eines Testzyklus die Speicherzellen entsprechend ihrer Speicheradressen in aufsteigender Reihenfolge getestet werden und in einem zweiten Abschnitt des Testzyklus die Speicherzellen entsprechend ihrer Speicheradressen in absteigender Reihenfolge getestet werden.

Arbeitet man auch im Funktionsbetrieb mit einer variablen Parität, so müsste eine auf den Speicher zugreifende Software stets das paritätsbestimmende Adressbit mit sich führen und daraus die aktuelle Parität ermitteln. Dieses Problem lässt sich umgehen, wenn bei Lesezugriffen auf eine Speicherzelle mit einer Speicheradresse ein festes Paritätsbit durch eine Ex-Or-Verknüpfung von einem paritätsbestimmenden Adressbit der jeweiligen Speicheradresse mit der ersten Prüfinformation der jeweiligen Speicherzelle gebildet wird und bei Schreibzugriffen auf die Speicherzelle die erste Prüfinformation durch eine Ex-Or-Verknüpfung des festen Paritätsbits mit dem paritätsbestimmenden Adressbit gebildet wird. D. h. es wird intern mit einem variablen Paritätsbit gearbeitet, nach außen wird jedoch bei Lesezugriffen eine feste Parität zur Verfügung gestellt bzw. bei Schreibzugriffen die von der Software gelieferte feste Parität intern in die variable Parität umgewandelt.

Für Hardware mit zweikanaliger Architektur kann die Fehlererkennungswahrscheinlichkeit erhöht werden, wenn zum Testen von Speichern mit Speicherzellen auf mindestens zwei unterschiedlichen Baueinheiten jeweils eine Signatur von Zugriffsdaten gebildet wird und die gebildeten Signaturen zur Fehlererkennung miteinander verglichen werden.

Das erfindungsgemäße Verfahren kann vorteilhaft auch als Build-In Self Test (abgekürzt BIST) bei der Produktion eines Speichers und/oder beim Power-On-Test eines Speichers eingesetzt werden.

Nachfolgend wird die Erfindung anhand der in den Figuren dargestellten Ausführungsbeispiele näher beschrieben und erläutert.

Es zeigen:

FIG 1    einen Basis-Testzyklus zum Test einer Speicherzelle,

FIG 2    einen Basis-Testzyklus am Beispiel eines 3*k-Bit-FIFO,

FIG 3    eine Hardwarearchitektur zur Realisierung eines Basis-Testzyklus,

FIG 4    eine Signaturbildung der Zugriffsdaten in einer zweikanaligen Architektur,

FIG 5    ein Szenario sogenannter Koppelfehler,

FIG 6    die interne Datenverarbeitung beim Vorgang Lesen mit fester Parität und

FIG 7    die interne Datenverarbeitung beim Vorgang Schreiben mit fester Parität.

Im Folgenden werden anhand der Zeichnung die einzelnen Schritte eines Verfahrens zum Testen von Speichern und die Komponenten einer Vorrichtung mit Speichern näher erläutert. Sofern nichts anderes gesagt wird, werden unter dem Begriff Speicher statische Halbleiterspeicher mit wahlfreiem Zugang, auch Schreib-Lese-Speicher genannt (RAM = Random-Access Memory) und/oder Nur-Lese-Speicher (ROM = Read-Only Memory) verstanden.

Die Einbindung eines Speichertests in einen Onlinetest erfordert einen gewissen zeitlichen und organisatorischen Aufwand. Die einschlägigen Normen (DIN 19250/19251, DIN 0801, DIN 0801/A1 und IEC 61508) definieren Anforderungsklassen bzw. fordern die Erkennung von Fehlern bei folgenden Vorgängen:

- Adressieren
- Schreiben
- Speichern
- Lesen

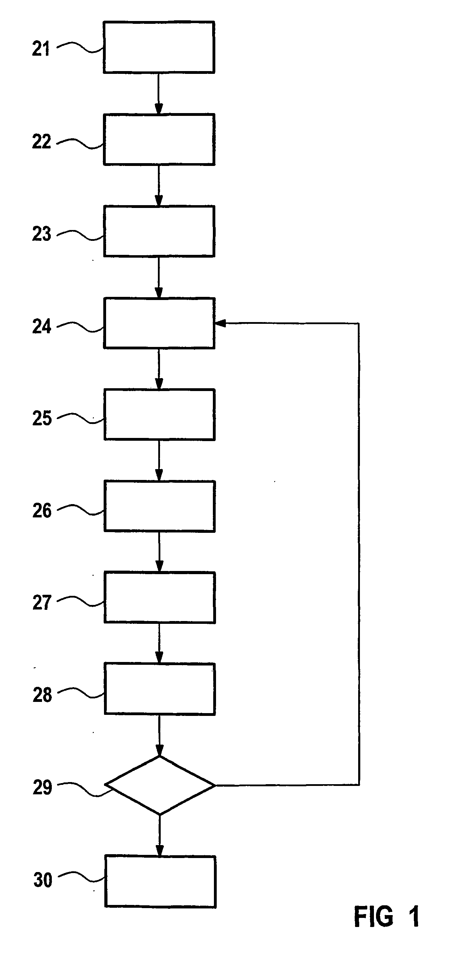

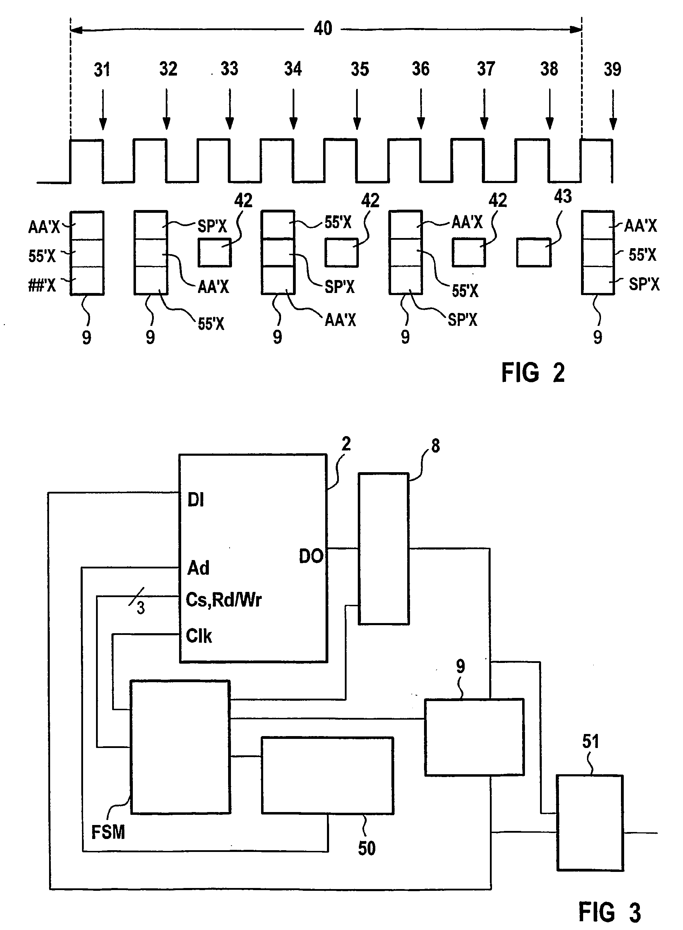

Im Gegensatz zu den Adressierungsfehlern lassen sich die restlichen drei Fehlerarten (Schreiben, Speichern und Lesen) mit relativ einfachen Hardwarestrukturen und Algorithmen erkennen. Bei den Adressierungsfehlern ist insbesondere die Erkennung der mehrfachen Adressierung sowie des Koppelfehlers relativ zeitaufwendig. Zunächst sollen daher die restlichen drei Fehlerarten betrachtet und ein Basistestkonzept zur Erkennung dieser Fehler anhand FIG 1 und FIG 2 vorgestellt werden. Je nach Anforderung der erwünschten Sicherheitsstufe (AK bzw. SIL) müssen dann zusätzliche Maßnahmen getroffen werden.

FIG 1 stellt die einzelnen Schritte 21 bis 30 eines Basis-Testzyklus des Basistestkonzepts dar. Innerhalb des Basis-Testzyklus wird eine Speicherzelle 1 auf Fehler bei den Vorgängen Schreiben, Speichern und Lesen getestet. Der Basis-Testzyklus beginnt mit der Initialisierung 21 eines FIFOs (FIFO = First In First Out-Speicher). Im nächsten Schritt 22 wird der Inhalt der zu testenden Speicherzelle 1 ausgelesen und in einem weiteren Schritt 23 in einem Latch 8 (Latch = Register) gespeichert. In der Digitaltechnik versteht man unter einem Latch eine Anordnung von bistabilen Schaltgliedern (Flip-Flops), mit deren Hilfe eine Information aufgenommen, kurzzeitig gespeichert und wieder abgegeben werden kann. Diese Information kann im Unterschied zum einzelnen R-S-Flip-Flop nicht nur aus einem Bit, sondern auch aus einem Datenwort mit mehreren Bits bestehen. Im Schritt 24 wird der Inhalt des Latch 8, das Lesedatum, im FIFO gespeichert und im Schritt 25 der Ausgang des FIFOs in die Speicherzelle 1 geschrieben. Im folgenden Schritt 26 wird die Speicherzelle 1 wieder ausgelesen und im Schritt 27 wird das Lesedatum wiederum in den Latch 8 geschrieben. Im Schritt 28 wird das Lesedatum im Latch 8 mit dem Ausgangsdatum des FIFOs verglichen. Je nachdem ob im Schritt 29 der ursprüngliche Inhalt der Speicherzelle 1 wiederhergestellt ist oder nicht (abhängig von der verwendeten FIFO-Tiefe) wird nun direkt der Schritt 30 ausgeführt bzw. der Vorgang ab Schritt 24 wiederholt. Schritt 30 besteht aus dem Inkrementieren des Adresszählers. Der Adresszähler weist nach dem Inkrementieren auf die nächste Speicherzelle, die in einem nächsten Basis-Testzyklus getestet wird, welcher wiederum aus den entsprechenden Schritten 22 bis 30 besteht. Der erste Schritt 21 erübrigt sich beim wiederholten Ausführen des Basis-Testzyklus, da der FIFO bereits durch die Durchführung des vorhergehenden Basis-Testzyklus korrekt initialisiert ist.

In FIG 2 wird der Vorgang entsprechend FIG 1 am Beispiel eines 3*k-Bit-FIFOs 9 veranschaulicht. Der Einfachheit halber wird zunächst ein synchroner, statischer und unidirektionaler Speicher betrachtet, der byteweise (d. h. k=8) organisiert ist. In FIG 2 wird dazu ein kompletter Basis-Testzyklus 40 dargestellt, welcher innerhalb von acht einzelnen Takten 31 bis 38 abläuft. Jede Speicherzelle 1 lässt sich mit sechs Speicherzugriffen, dreimal Schreiben und dreimal Lesen, bezüglich der Vorgänge Schreiben, Speichern und Lesen vollständig überprüfen. Bei einem k-Bit-Wort werden die sämtlichen k Bits eines Wortes als eine Speicherzelle betrachtet. Am Ende des Tests wird der ursprüngliche Zelleninhalt (d. h. die Funktionsdaten) wieder hergestellt. Das Schreibdatum wird grundsätzlich aus dem FIFO 9 geholt und das Lesedatum wird in den FIFO 9 übertragen. Vor Beginn des eigentlichen Tests wird der FIFO 9 initialisiert, d. h. die obersten zwei FIFO-Stufen werden mit den Inhalten AA'X bzw. 55'X vorbesetzt. Bei k≠ 8 werden die obersten zwei Stufen entsprechend mit den Bitmustern "1010....." bzw. "0101....." belegt.

Die unterste Stufe beinhaltet ein zufälliges Datum ##'X. Die Speicherzelle 1 enthält am Anfang den Inhalt SP'X. Mit dem Suffix 'X soll hier eine hexadezimale Zahl gekennzeichnet sein. Der ganze Basis-Testzyklus 40 benötigt insgesamt acht Takte 31 bis 38 zum Testen einer Speicherzelle 1. Die Vorgänge während der einzelnen Takte 31 bis 38 werden im Folgenden beschrieben. Im ersten Takt 31 wird der ursprüngliche Inhalt SP'X der Speicherzelle 1 ausgelesen und in den Latch 8 am Ausgang des Speichers 2 übernommen. Der Inhalt des FIFOs 9 entspricht der Initialisierung. Im zweiten Takt 32 wird nun der eingelesene Inhalt SP'X aus dem Latch 8 in den FIFO 9 übernommen. Im gleichen Takt 32 wird das Ausgangsdatum 55'X des FIFOs 9 in die Speicherzelle 1 geschrieben. Im folgenden dritten Takt 33 wird das zuletzt geschriebene Datum 55'X wieder aus der Speicherzelle ausgelesen und im Latch 8 gespeichert. Das ausgelesene Datum 55'X wird mit dem Ausgangsdatum des FIFOs 9 verglichen, beide sollten den gleichen Wert haben. Der Vorgang des Vergleichens ist in FIG 2 jeweils mit dem Bezugszeichen 42 gekennzeichnet. Im vierten Takt 34 wird das Lesedatum 55'X aus dem Latch 8 in den FIFO 9 übernommen. Das nunmehr aktuelle Ausgangsdatum AA'X des FIFOs 9 wird, ebenfalls im vierten Takt 34, in die Speicherzelle 1 geschrieben. Das zuletzt geschriebene Datum AA'X wird im fünften Takt 35 aus der Speicherzelle 1 wieder ausgelesen und im Latch 8 gespeichert. Der Wert im Latch 8 wird mit dem Ausgangsdatum AA'X des FIFOs 9 verglichen, beide haben im Idealfall den gleichen Wert. Im sechsten Takt 36 wird das Lesedatum AA'X aus dem Latch in den FIFO 9 übernommen. Das Ausgangsdatum des FIFOs 9, welches nun den ursprünglichen im ersten Takt 31 aus der Speicherzelle 1 ausgelesenen Speicherinhalt SP'X darstellt, wird in die Speicherzelle 1 zurückgeschrieben. Das zuletzt geschriebene Datum SP'X aus der Speicherzelle wird im siebten Takt 37 wieder ausgelesen und im Latch 8 gespeichert. Der Inhalt des Latch 8 wird mit dem Ausgangsdatum SP'X des FIFOs 9 verglichen, beide beinhalten das ursprüngliche aus der Speicherzelle 1 ausgelesene Datum SP'X. Im achten Takt 38 schließlich wird der Adresszähler, der die Speicherzelle 1 adressiert um eins inkrementiert (gekennzeichnet mit dem Bezugszeichen 43). Die Testhardware steht nun bereit zum Testen der nächsten Speicherzelle (Takt 39). Die hier aufgeführten Schritte können relativ bequem mit einer Zustandsmaschine (FSM = Finite State Machine) implementiert werden. Eigentlich ist im sechsten Takt 36 die Überprüfung der Speicherzelle 1 beendet und der ursprüngliche Speicherzustand wiederhergestellt. Im siebten Takt 37 wird der ursprüngliche Speicherinhalt zum zweitenmal ausgelesen und mit dem im ersten Takt 31 ausgelesenen Speicherinhalt SP'X verglichen. Auf diese Weise kann man in 8*n Takten n Speicherzellen überprüfen. n stellt hier den gesamten Adressraum dar. Bei m Adressbits ist $n = 2^m$.

FIG 3 zeigt die zur Prüfung einer Speicherzelle erforderliche Hardwarearchitektur. Dargestellt ist ein Speicher 2, welcher n Speicherzellen mit jeweils k Bit enthält. Der Speicher 2 besitzt einen Dateneingang DI (Data Input), einen Adressiereingang Ad, einen Trigger- oder Takteingang Clk sowie die Eingänge Cs, Rd/Wr, welche für den Zugang der Steuersignale Chip Select (CS), Schreibzugriff (Wr) bzw. Lesezugriff (Rd) vorgesehen sind. Der Speicher kann über den Datenausgang DO (Data Output) Daten an einen k-Bit-Latch 8 ausgeben. Eine Zustandsmaschine FSM steuert die Prüfung des Speichers. Die Adressierung einer einzelnen Speicherzelle erfolgt über einen Adresszähler 50. Zur Zwischenspeicherung der ausgelesenen und einzulesenden Daten dient ein 3*k-Bit-FIFO 9. Die Daten aus Latch 8 und FIFO 9 werden mit einem Vergleicher 51 verglichen.

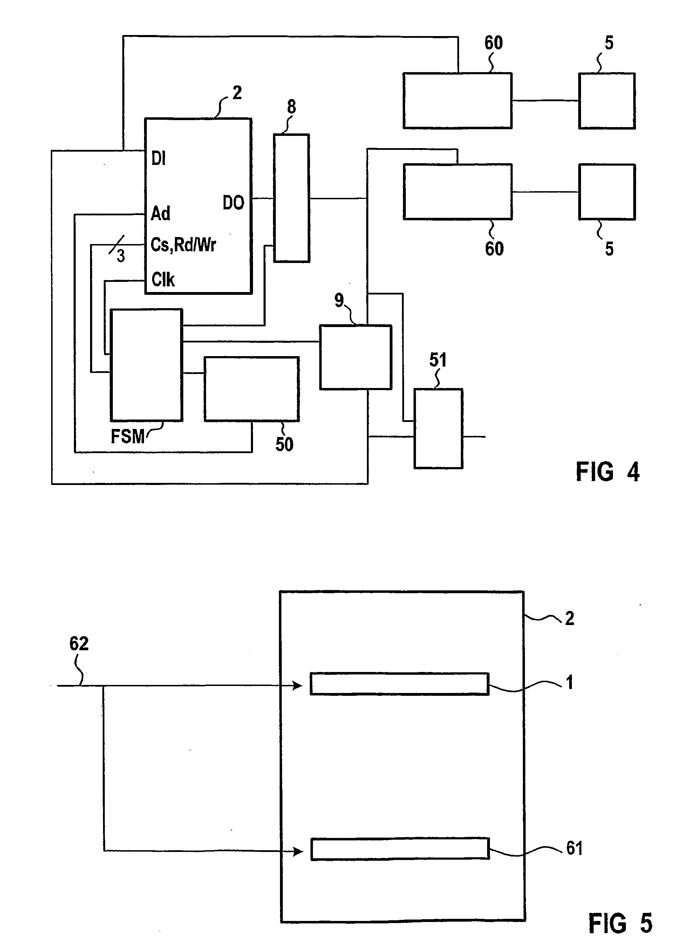

FIG 4 zeigt ein Ausführungsbeispiel eines Speichersystems bei zweikanaliger Architektur. Bei zweikanaliger Architektur lassen sich zusätzlich mit wenig Aufwand Signaturen 5 der Zugriffsdaten bilden. Ein Vergleich der Signaturen 5 mit den Signaturen der Zugriffsdaten im Partner-ASIC (in FIG 4 nicht dargestellt) erhöht zusätzlich die Fehlererkennungswahrscheinlichkeit (siehe DE 100 37 992). Zusätzlich zu den bereits anhand FIG 3 beschriebenen Elementen werden dafür zwei linear rückgekoppelte Schieberegister 60 (LFSR = Linear Feedback Shift Register) benötigt. Ein LFSR 60 dient zur Bildung der Signatur 5 der Schreibdaten, das andere LFSR 60 zur Bildung der Signatur 5 der Lesedaten des Speichers. Bei linear rückgekoppelten Schieberegistern werden bestimmte Bits des Schieberegisters über ein XNOR-Gatter an den Eingang rückgekoppelt.

Das hier vorgeschlagene Verfahren zum Testen von Speichern ist besonders geeignet zur Erkennung von Fehlern beim Vorgang Adressieren, insbesondere zum Erkennung von sogenannten Koppelfehlern. Bei den Koppelfehlern handelt es sich um die unerwünschte Kopplung zwischen zwei bzw. mehreren Speicherzellen. Die Erkennung der Koppelfehler ist üblicherweise sehr zeitaufwendig und der Testaufwand wächst bei den bisher bekannten Verfahren quadratisch mit der Anzahl der Speicherzellen n. Die hier vorgestellte Testarchitektur ist einfach zu realisieren und lässt sich problemlos in das zuvor beschriebene Online-Testkonzept einbinden. Hiermit kann eine Sicherheitsanforderung bis AK 4 (nach DIN 19250/19251) oder SIL 2 bis 3 (nach IEC 61508) erreicht werden. Das Konzept lässt sich sowohl bei einkanaliger als auch bei zweikanaliger Architektur anwenden.

Koppelfehler zwischen Speicherzellen (sogenannte vertikale Koppelfehler) sind sehr komplex. Die bekannten Testverfahren beschränken sich zunächst auf die Erkennung einfacher Koppelfehler. FIG 5 zeigt ein typisches Szenario eines Koppelfehlers. Dargestellt ist ein Speicher 2 mit Speicherzellen 1, 61, auf die über eine Verbindung 62 zugegriffen werden kann. Bei einem Koppelfehler sind die adressierten und die selektierten Speicherzellen nicht dieselben. Im Folgenden wird die adressierte Speicherzelle auch als Koppelzelle, die selektierte Speicherzelle als gekoppelte Zelle bezeichnet. Wird eine erste Speicherzelle 1 adressiert aber auf eine zweite Speicherzelle 61 zugegriffen, dann bleibt die erste Speicherzelle 1, falls keine weitere Fehlerquellen existieren, nicht zugreifbar. Ein Lese- bzw. Schreibzugriff auf die erste Speicherzelle 1 läuft formal korrekt ab, ohne dass jedoch ihr Inhalt angetastet wird. Um solche Fehler zu lokalisieren wird gewöhnlich der ganze Speicher mit einem bekannten Muster vorbelegt (z. B. 55'X oder AA'X). Anschließend wird adressweise der Speicherinhalt invertiert und der ganze Speicher auf einen korrekten Dateninhalt geprüft. Bekannte Tests nach diesem Verfahren sind Walkpat und Galpat. Der Testaufwand steigt bei diesen Verfahren proportional zum Quadrat der Anzahl n der Speicherzellen. Für Onlinetests sind Verfahren dieser Art nicht geeignet, da zum einen die aktuelle Speicherbelegung durch den Test zerstört wird und zum anderen die Testzeit drastisch mit der Speichergröße anwächst und somit unter Umständen ein vollständiger Test des Speichers in einer vorgeschriebenen Zeit nicht durchgeführt werden kann. Durch Codierung der Daten (Speicherinhalt) lässt sich hier Abhilfe schaffen. Im oben genannte Fehlerfall wird das Datum eigentlich nicht verfälscht sondern nur fehlerhaft zugeordnet. Solche Fehler können nur dann erkannt werden, wenn die Adresse bei der Codebildung einbezogen wird. Die Parität stellt die einfachste und was die Informationsrate anbelangt die effektivste Codierung dar. Mit der Parität lassen sich die Einbitfehler zu hundert Prozent erkennen. Die Einbeziehung der Parität als eine der Codierungsmöglichkeiten zur Erkennung der Koppelfehler verbessert die Gesamtsituation, sie bleibt jedoch unbefriedigend. Man kann die Effektivität der Parität jedoch drastisch steigern, wenn man mit einer variablen Parität VP, z. B. mit einer adressabhängigen Parität arbeitet. Damit werden alle Koppelfehler vom obengenannten Typ erkennbar. Die Einführung einer variablen Parität VP hat den entscheidenden Vorteil, dass die Adresse nicht unbedingt in die Paritätsbildung einbezogen werden muss. Die Fehleranalyse ohne den Bezug zur Adresse wird sogar vereinfacht und transparent. Bei byteweise organisierten Speichern benötigt man ein Bit zusätzlich (d. h. 12,5% Speicher-Overhead) oder eine Reduktion der Daten um ein Bit von acht auf sieben. Der Koppelfehler wird grundsätzlich erkannt, wenn die Paritäten der Koppelzelle und der gekoppelten Zelle ungleich sind.

Tabelle 1

| Adresse | MSB A3 | A2 | A1 | LSB A0 |
|---|---|---|---|---|
| 0 | 0 | 0 | 0 | 0 |
| 1 | 0 | 0 | 0 | 1 |
| 2 | 0 | 0 | 1 | 0 |
| 3 | 0 | 0 | 1 | 1 |
| 4 | 0 | 1 | 0 | 0 |
| 5 | 0 | 1 | 0 | 1 |
| 6 | 0 | 1 | 1 | 0 |
| 7 | 0 | 1 | 1 | 1 |
| 8 | 1 | 0 | 0 | 0 |
| 9 | 1 | 0 | 0 | 1 |
| 10 | 1 | 0 | 1 | 0 |
| 11 | 1 | 0 | 1 | 1 |
| 12 | 1 | 1 | 0 | 0 |
| 13 | 1 | 1 | 0 | 1 |
| 14 | 1 | 1 | 1 | 0 |
| 15 | 1 | 1 | 1 | 1 |
| Testzyklus | 1 | 2 | 3 | 4 |

Zum besseren Verständnis soll das hier vorgeschlagene Verfahren an einem 16-Byte-Speicher verdeutlicht werden. Zur Darstellung des gesamten Adressraums dieses Speichers benötigt man vier Adressbits. Jede beliebige Speicherzelle lässt sich mit einem 4-Bit-Zähler (z. B. Adresszähler 50 in FIG 3 und FIG 4) adressieren. Die sechzehn Zustände dieses Zählers sind in Tabelle 1 zusammengestellt. Zur vollständigen Erkennung der Koppelfehler muss jedes Adresspaar mindestens einmal mit einer unterschiedlichen Parität beaufschlagt werden.

Der Speichertest wird mittels einer Zustandsmaschine (FSM) gesteuert. Die Zustandsmaschine durchwandert sämtliche Adressen von 0 bis 15. Bei dem hier beschriebenen Test wird eines der Adressbits als variable Parität VP genutzt. Im Betrachtungsfall ergeben sich dann maximal vier Testzyklen mit der zyklusabhängigen variablen Parität VP. Im ersten Testzyklus wird die variable Parität VP aus MSB (= Most Significant Bit = höchstwertigstes Bit), also Bit $A_3$ der Adresse, abgeleitet. Im Beispiel sei $A_3$ = '0' als gerade Parität und $A_3$ =' 1' als ungerade Parität vorgesehen. Wie man anhand Tabelle 1 sieht, wird die Hälfte der Speicherzellen in diesem Testzyklus mit der geraden Parität und die andere Hälfte mit der ungeraden Parität beaufschlagt. Dies ist in sämtlichen Testzyklen so. Im ersten Testzyklus sind die Speicherzellen der oberen Hälfte des Speichers (Adresse 0 bis 7) mit der geraden Parität, die Speicherzellen der unteren Hälfte des Speichers (Adresse 8 bis 15) mit der ungeraden Parität beaufschlagt. Alle Koppelfehler paarweise betrachtet, zwischen einer beliebigen Adressen aus der oberen Gruppe und einer beliebigen Adresse aus der unteren Gruppe, werden stets erkannt. Nicht erkannt werden die Koppelfehler untereinander in der oberen Hälfte (mit $A_3$ = 0) bzw. in der unteren Hälfte (mit $A_3$ = 1). Die Hälfte der nicht erkannten Koppelfehler in den beiden Bereichen werden im zweiten Testzyklus erkannt, bei welchem die variable Parität VP durch das Adressbit $A_2$ dargestellt wird. In jedem weiteren Testzyklus wird dann die Hälfte der bis dahin nicht erkannten Koppelfehler erkannt. Schließlich werden im letzten Testzyklus mit Adressbit $A_0$ (LSB = Least Significant Bit = niederwertigstes Bit) als variable Parität VP sämtliche bis dahin nicht erkannten Koppelfehler erkannt. Auf diese Weise werden sämtliche Koppelfehler des oben genannten Typs in wenigen Takten (Anzahl der benötigten Takte nicht quadratisch sondern einfach proportional zur Anzahl der Speicherzellen mal Anzahl der Adressbits) und mit geringerer zusätzlicher Hardware erkannt.

Der vorgeschlagene Speichertest besteht somit aus zwei Phasen: In der ersten Phase wird der oben beschriebene Basistest durchgeführt. Dabei werden die Speicherzellen auf die Vorgänge Schreiben, Lesen und Speichern überprüft. Dieser Basistest wird dahingehend ergänzt, dass der im sechsten Takt 36 zurückgeschriebene ursprüngliche Speicherinhalt nun mit der variablen Parität des aktuellen Testzyklus gemäß Tabelle 1 zurückgeschrieben wird. In der zweiten Phase wird nach dem Rückschreiben des gesamten Speichers mit der variablen Parität mit den funktionalen Daten der Speicher wieder komplett ausgelesen und die Parität des Datums mit der variablen Parität VP (Paritätsbestimmung durch Adressbit $A_{(4-i)}$ im $i^{ten}$ Zyklus) verglichen. Die zweite Phase benötigt nur zwei Takte pro Speicherzelle, einen Takt zum Lesen und einen Takt zum Vergleichen des Datums sowie Inkrementieren des Adresszählers (eventuell können beide Aufgaben in einer Taktperiode erledigt werden). Im bisher beschriebenen Verlauf des Speichertests wurde der Speicher aufwärts abgearbeitet (beginnend mit der Adresse 0). Hat die gekoppelte Speicherzelle jedoch eine höhere Adresse als die Koppelzelle (siehe FIG 5), so wird ihr Datum im Laufe der Phasenbearbeitung zu einem späteren Zeitpunkt noch einmal mit der variablen Parität VP überschrieben. Um diesen Koppelfehler zu erkennen müssen die erste und die zweite Phase noch einmal wiederholt werden, wobei diesmal der Speicher abwärts abgearbeitet wird (beginnend mit der Adresse n). Die zweite Phase läuft dabei unverändert ab. Die erste Phase benötigt insgesamt 8*n Takte. Die zweite Phase benötigt weitere 2*n Takte, so dass die beiden Phasen zusammen 10*n Takte benötigen. Für das Abarbeiten der Speicher in der absteigenden Adressfolge kann man auf das Schreiben und Lesen des Speichers mit dem Datum 55'X und AA'X verzichten. Die erste Phase kann in diesem Fall auf drei Takte beschränkt werden:

- Lesen des aktuellen Datums SP'X (Funktionsdatum)
- Schreiben des Datums mit der variablen Parität
- Dekrementieren des Adresszählers (nächste Adresse)

Für das abwärts Abarbeiten des Speichers benötigt man maximal (3+2)*n = 5*n Takte. Man braucht also insgesamt maximal 15*n Takte für einen Testzyklus mit einem variablen Paritätsmuster, bestimmt durch eines der Adressbits $A_i$. Ein Testzyklus besteht grundsätzlich aus zwei Testläufen, d. h. aus zwei Abschnitten, einem mit aufsteigender und einem mit absteigender Adressfolge. Ein Adressraum mit m Adressbits, wobei

$$m = \log_2 n$$

gilt, benötigt somit maximal insgesamt (15*n*m) Takte. Für die zeitkritischen Anwendungen kann man bei den Testzyklen 2 bis m auf die erste Phase sogar komplett verzichten. In diesem Falle benötigt man dann maximal (10*n*m + 5*n) Takte für einen vollständigen Speichertest. Diese maximale Anzahl von (10*n*m + 5*n) Takten lässt sich noch erheblich reduzieren, wenn man stets mit der variablen Parität VP nach oben beschriebenem Verfahren arbeitet. D. h. auch im Funktionsbetrieb wird die Parität durch das jeweilige Adressbit $A_i$, abhängig vom Testzyklus, bestimmt. In diesem Falle entfallen die drei Takte (Lesen, Schreiben mit der variablen Parität und Dekrementieren des Adresszählers) für den Zyklusablauf mit der absteigenden Adressfolge. Es werden dann nicht 15*n Takte sondern 12*n Takte für den ersten Testzyklus benötigt. Für die weiteren Zyklen benötigt man dann 4*n Takte pro Zyklus (2*n für die aufsteigende und 2*n für die absteigende Adressfolge, jeweils für die zweite Phase, die erste Phase entfällt). Somit benötigt man insgesamt maximal (4*n*m + 8*n) Takte für einen vollständigen Speichertest. Der Vorteil des schnelleren Testdurchlaufs (Gewinn ca. 60%) muss mit einem höheren Softwareaufwand in Kauf genommen werden. Die Software muss in diesem Fall stets das paritätsbestimmende Adressbit $A_i$ mit sich führen und daraus die aktuelle Parität ermitteln. Dieses Problem lässt sich jedoch relativ einfach umgehen, wenn intern mit einem variablen Paritätsbit, wie oben beschrieben, operiert wird. Nach außen wird jedoch bei den Lesezugriffen ein manipuliertes Paritäts-Bit, das durch eine Ex-Or-Verknüpfung von $A_i$ und variablem Paritätsbit gebildet wird und eine feste Parität FP (im Betrachtungsfall gerade Parität) wiedergibt, zur Verfügung gestellt. Bei den Schreibzugriffen wird das von der Software gelieferte Paritäts-Bit mit der festen Parität FP (im Betrachtungsfall gerade Parität) intern durch eine Ex-Or-Verknüpfung mit dem paritätsbestimmenden Adressbit $A_i$ zur variablen Parität VP umgewandelt. Das so gewonnene Paritätsbit wird dann in den Speicher übertragen. Hierzu benötigt man zwei zusätzliche Ex-Or-Gatter, wie aus der Tabelle 2 entnommen werden kann.

Tabelle 2

| Paritätsbestimmendes Adressbit | Datum Dx Dg = gerade Parität Du = ungerade Parität | Variable Parität | Bildung der festen Parität FP (gerade) bei den Lesezugriffen | Bildung der variablen Parität VP bei den Schreibzugriffen |
|---|---|---|---|---|
| $A_i$ | | VP | $FP = A_i \oplus VP$ | $VP = A_i \oplus FP$ |
| 0 | Dg | 0 | 0 | 0 |

(fortgesetzt)

| Paritätsbestimmendes Adressbit $A_i$ | Datum Dx Dg = gerade Parität Du = ungerade Parität | Variable Parität VP | Bildung der festen Parität FP (gerade) bei den Lesezugriffen FP = $A_i \oplus$ VP | Bildung der variablen Parität VP bei den Schreibzugriffen VP = $A_i \oplus$ FP |
|---|---|---|---|---|
| 1 | Dg | 1 | 0 | 1 |
| 0 | Du | 1 | 1 | 1 |
| 1 | Du | 0 | 1 | 0 |

Arbeitet man stets mit einer variablen Parität VP (auch im Funktionsmodus), so muss bei dem oben beschriebenen Basistestkonzept bei den Lesezugriffen die gelesene Parität mit der aktuellen variablen Parität, ermittelt durch Einbeziehung des paritätsbestimmenden Adressbits $A_i$, verglichen werden. Dieser Vergleich findet bei allen Lesezugriffen statt, außer in der ersten Taktperiode des Basistests, da nach dem Power-On der Speicher mit Zufallsdaten vorbelegt ist und die Parität ungültig ist. Bei den Schreibzugriffen wird die variable Parität VP unter Einbeziehung des paritätsbestimmenden Adressbit $A_i$ gebildet und zusammen mit dem Datum im Speicher übertragen.

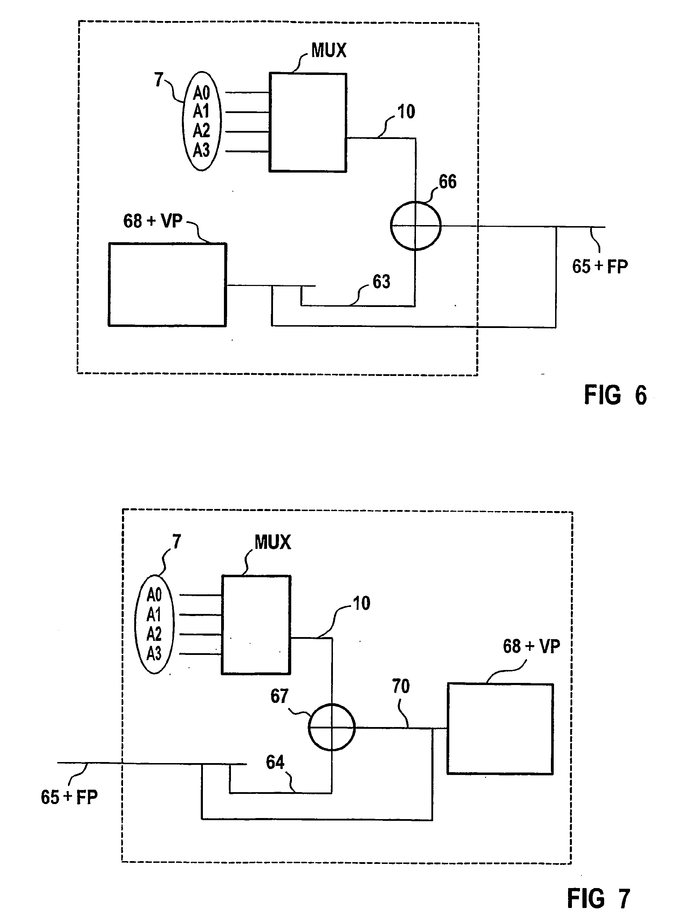

FIG 6 und FIG 7 zeigen die für die Speicherzugriffe im Funktionsbetrieb benötigte Hardware, falls intern stets mit der variablen Parität gearbeitet wird. FIG 6 stellt die interne Datenverarbeitung beim Vorgang Lesen dar. In einer Speicherzelle ist ein mit einer variablen Parität VP beaufschlagtes Datum 68 gespeichert. Beim Lesezugriff auf diese Speicherzelle, z. B. durch eine externe Software, wird allerdings nicht das Datum 68 mit variabler Parität VP weitergegeben, sondern das Datum 65 mit einer festen Parität FP. Dazu wird intern, also innerhalb der Hardware-Schaltung, aus den Adressbits 7 der Speicheradresse der jeweiligen Speicherzelle mit einem Multiplexer MUX ein paritätsbestimmendes Adressbit 10 ausgewählt. Dieses Adressbit 10 wird in einem Ex-Or-Gatter 66 mit dem variablen Paritätsbit 63 des Datums 68 Ex-Or-verknüpft. Das Ergebnis dieser Ex-Or-Verknüpfung ist ein festes Paritätsbit 69, welches zur Bildung des externen Datums 65 verwendet wird. Die lesende Software sieht somit die variable Parität VP nicht, sondern kann mit Daten mit einer festen Parität FP arbeiten.

Im Falle des Vorgangs Schreiben liegt ein mit einer festen Parität FP beaufschlagtes externes Datum 65 vor, welches im Speicher in einer Speicherzelle gespeichert werden soll. Aus den Adressbits 7 der Speicheradresse der jeweiligen Speicherzelle wird mit einem Multiplexer MUX ein paritätsbestimmendes Adressbit 10 ausgewählt. Dieses Adressbit 10 wird in einem Ex-Or-Gatter 67 mit dem festen Paritätsbit 64 des Datums 65 Ex-Or-verknüpft. Das Ergebnis dieser Ex-Or-Verknüpfung ist das variable Paritätsbit 70, welches zur Bildung des internen Datums 68 verwendet wird. Dieses mit der variablen Parität VP beaufschlagte interne Datum 68 wird in einer Speicherzelle gespeichert. Die anhand FIG 6 und FIG 7 erläuterte Hardware bildet die weiter oben anhand Tabelle 2 beschriebenen Vorgänge ab. Das paritätsbestimmende Adressbit 10 entspricht dabei dem oben genannten Adressbit $A_i$.

Im Folgenden werden Vorteile des hier beschriebenen Testverfahrens noch einmal zusammenfassend genannt. Der zeitliche Testaufwand wächst proportional zur Anzahl der Speicherzellen n multipliziert mit $m=\log_2 n$ und nicht quadratisch mit dem Adressraum n wie bei bisher bekannten Standard-Tests. Bereits bei einem 1 kB-Speicher bedeutet dies eine Reduktion der Anzahl der Takte um den Faktor hundert. Der Multiplikator beträgt anstatt 1024 bei den bisher bekannten Verfahren bei dem hier vorgeschlagenen Verfahren nur noch $\log_2 1024 = 10$. Bei zunehmender Speichergröße lässt sich der hier beschriebene Algorithmus sehr gewinnbringend einsetzen, da der zeitliche Testaufwand im Vergleich zu bekannten Verfahren exponentiell mit der Zunahme des Speichers abnimmt. Es werden alle einfachen Koppelfehler vom Grundtypus erkannt. Das Verfahren ist in der Lage auch mehrfache Koppelfehler zu erkennen. Das Verfahren ist einfach durchzuführen und einfach zu implementieren und lässt sich so auch für den Produktionstest gewinnbringend einsetzen. Der hier vorgeschlagene Algorithmus lässt sich problemlos an beliebiger Stelle unterbrechen und ist deshalb besonders vorteilhaft im Rahmen des oben beschriebenen Online-Testkonzepts einzusetzen, bei welchem mit diesem Verfahren ein Wechsel zwischen Testbetrieb und Funktionsbetrieb an beliebiger Stelle möglich wird. Als einziger Nachteil wird gesehen, dass ein Bit zusätzlich für die Parität benötigt wird.

Im Funktionsmodus steht dem Anwender frei entweder mit einer festen Parität oder ohne Einbeziehung der Parität zu operieren. In beiden Fällen wird intern mit der variablen Parität gearbeitet. Zum Durchführen eines vollständigen Speichertests benötigt man maximal (4*n*m + 8*n) Takte für einen Speicher mit n Speicherzellen. Da in beiden Fälle die gleiche Anzahl der Takte für einen vollständigen Test benötigt werden, wird empfohlen mit einer festen Parität zu arbeiten. In diesem Fall kann auch ein zufälliger Fehler, der während des Funktionsbetriebs entsteht sofort beim Lesen des Speichers erkannt werden.

Zum besseren Verständnis wurde in der Beschreibung ein synchroner statischer und unidirektionaler Speicher betrachtet. Grundsätzlich lässt sich das hier beschriebene Verfahren jedoch für eine beliebige Speicherart mit entsprechender Modifikation anwenden. So kann ein asynchroner Speicher durch eine kleine Zusatzlogik an den Ein- bzw. Ausgängen , die taktgesteuert den Speicher mit Daten (Adresse, Datum und Steuersignale) versorgt, wie ein synchroner Speicher betrieben werden. Bei einem dynamischen Speicher muss darauf geachtet werden, dass die Refreshzyklen während des Speichertests berücksichtigt werden. Ein bidirektionaler Speicher kann durch Hinzufügen eines Eingangs- bzw. eines Ausgangslatchs am Datenport wie ein unidirektionaler Speicher betrieben werden. Mehrtorspeicher können mit dem gleichen Verfahren getestet werden, wobei der Speichertest nur für einzelne Speichertore (Ports) oder nacheinander für jedes Speichertor (Port) durchgeführt wird. Alle genannten Speicher können als ASIC (= Application-Specific Integrated Circuit = anwenderspezifischer integrierter Schaltkreis) oder als Teil eines solchen realisiert sein.

Zusammenfassend betrifft die Erfindung somit ein Verfahren und eine Vorrichtung zum Testen und/oder Betreiben von Speichern, welche einen zeitsparenden Test von Halbleiterspeichern während des laufenden Betriebs ermöglichen. Bei dem Verfahren zum Testen von Speichern 2 mit Speicherzellen 1 wird zu den Speicherzellen 1 jeweils eine erste Prüfinformation in Abhängigkeit von einem der jeweiligen Speicherzelle 1 zugeordneten variablen Parameter und einem Inhalt der jeweiligen Speicherzelle 1 gebildet.

**Patentansprüche**

1. Verfahren zum Betreiben und/oder Testen von Speichern (2) mit Speicherzellen (1), bei welchem zu den Speicherzellen (1) jeweils eine erste Prüfinformation in Abhängigkeit von einer der jeweiligen Speicherzelle (1) zugeordneten variablen Parität (VP) und einem Inhalt der jeweiligen Speicherzelle (1) gebildet wird,
**dadurch gekennzeichnet,**
**dass** in mehreren Testzyklen

   - jeweils in einer ersten Phase

      - jeweils ein Inhalt der Speicherzellen (1) gelesen wird,
      - zu den Speicherzellen (1) jeweils eine erste Prüfinformation in Abhängigkeit von der der jeweiligen Speicherzelle (1) zugeordneten variablen Parität und dem in der ersten Phase gelesenen Inhalt der jeweiligen Speicherzelle (1) gebildet wird,
      - die Speicherzellen (1) mit dem in der ersten Phase gelesenen Inhalt jeweils erweitert um die erste Prüfinformation beschrieben werden und

   - jeweils in einer zweiten Phase zur Erkennung von Fehlern beim Vorgang Adressieren der Inhalt der Speicherzellen (1) gelesen, eine zweite Prüfinformation aus dem in der zweiten Phase gelesenen Inhalt unter Einbeziehung der variablen Parität gebildet und die zweite Prüfinformation mit der zu der jeweiligen Speicherzelle (1) in der ersten Phase gebildeten ersten Prüfinformation verglichen wird, wobei

   eine einer Anzahl von Adressbits (7) einer binär dargestellten Speicheradresse entsprechende Anzahl von Testzyklen vorgesehen ist und in jedem Testzyklus jeweils ein anderes Adressbit (7) zur Variation der variablen Parität verwendet wird.

2. Verfahren nach Anspruch 1,
**dadurch gekennzeichnet,**
**dass** am Ende eines Basis-Testzyklus eines Basistests die Speicherzellen (1) jeweils mit dem in der ersten Phase gelesenen Inhalt beschrieben werden.

3. Verfahren nach Anspruch 1 oder 2,
**dadurch gekennzeichnet,**
**dass** in der ersten Phase Speicherzellen (1) zur Erkennung von Fehlern bei den Vorgängen Schreiben, Lesen und Speichern beschrieben und gelesen werden.

4. Verfahren nach einem der vorhergehenden Ansprüche,
**dadurch gekennzeichnet,**
**dass** zum Testen von Speichern (2) mit Speicherzellen (1) auf mindestens zwei unterschiedlichen Baueinheiten jeweils eine Signatur (5) von Zugriffsdaten gebildet wird und die gebildeten Signaturen (5) zur Fehlererkennung miteinander verglichen werden.

5. Verfahren nach einem der vorhergehenden Ansprüche,

**dadurch gekennzeichnet,**
**dass** das Verfahren zur Erkennung von Koppelfehlern eingesetzt wird, wobei ein Koppelfehler durch die fehlerhafte Zuordnung einer oder mehrerer Speicherzellen (1) zu einer Speicheradresse **gekennzeichnet** ist.

6. Verfahren nach einem der vorhergehenden Ansprüche,
**dadurch gekennzeichnet,**
**dass** in jedem Testzyklus jeweils ein anderes Adressbit (7) als variable Parität (VP) zur Bildung der ersten Prüfinformation verwendet wird.

7. Verfahren nach einem der vorhergehenden Ansprüche,
**dadurch gekennzeichnet,**
**dass** in der ersten Phase eines Testzyklus bei jeder Speicherzelle (1) des Speichers (2) jeweils

- ein ursprünglicher Inhalt der Speicherzelle (1) gelesen und in ein Register (8) am Ausgang des Speichers (2) übernommen wird,
- der gelesene ursprüngliche Inhalt aus dem Register (8) in einen FIFO (9) übernommen wird und ein erstes Ausgangsdatum des FIFOs (9) in die Speicherzelle (1) geschrieben wird,
- der Inhalt der Speicherzelle (1) wiederum gelesen, in das Register (8) am Ausgang des Speichers (2) übernommen wird und mit dem ersten Ausgangsdatum des FIFOs (9) verglichen wird,
- der gelesene Inhalt aus dem Register (8) in den FIFO (9) übernommen wird und ein zweites Ausgangsdatum des FIFOs (9) in die Speicherzelle (1) geschrieben wird,
- der Inhalt der Speicherzelle (1) wiederum gelesen, in das Register (8) am Ausgang des Speichers (2) übernommen wird und mit dem zweiten Ausgangsdatum verglichen wird und
- der gelesene Inhalt aus dem Register (8) in den FIFO (9) übernommen wird und der ursprüngliche Inhalt aus dem FIFO (9) in die Speicherzelle (1) geschrieben wird.

8. Verfahren nach einem der vorhergehenden Ansprüche,
**dadurch gekennzeichnet,**
**dass** in einem ersten Abschnitt eines Testzyklus die Speicherzellen (1) entsprechend ihrer Speicheradressen in aufsteigender Reihenfolge getestet werden und in einem zweiten Abschnitt des Testzyklus die Speicherzellen (1) entsprechend ihrer Speicheradressen in absteigender Reihenfolge getestet werden.

9. Verfahren nach einem der vorhergehenden Ansprüche,
**dadurch gekennzeichnet,**
**dass** in einem Funktionsbetrieb bei Lesezugriffen auf eine Speicherzelle (1) mit einer Speicheradresse ein festes Paritätsbit (69) durch eine Ex-Or-Verknüpfung von einem paritätsbestimmenden Adressbit (10) der jeweiligen Speicheradresse mit der ersten Prüfinformation (63) der jeweiligen Speicherzelle (1) gebildet wird und bei Schreibzugriffen auf die Speicherzelle (1) die erste Prüfinformation (70) durch eine Ex-Or-Verknüpfung des festen Paritätsbits (64) mit dem paritätsbestimmenden Adressbit (10) gebildet wird.

10. Verfahren nach einem der vorhergehenden Ansprüche,
**dadurch gekennzeichnet,**
**dass** das Verfahren zum Testen von Speichern innerhalb beliebiger Zeitabschnitte des Funktionsbetrieb vorgesehen ist.

11. Verfahren nach einem der vorhergehenden Ansprüche,
**dadurch gekennzeichnet,**
**dass** das Verfahren als Build-In Self Test bei einer Produktion eines Speichers (2) verwendet wird.

12. Vorrichtung mit Speichern (2) mit Speicherzellen (1),
wobei den Speicherzellen (1) jeweils eine erste Prüfinformation in Abhängigkeit von einer der jeweiligen Speicherzelle (1) zugeordneten variablen Parität und einem Inhalt der jeweiligen Speicherzelle (1) zugeordnet ist, wobei die Vorrichtung Mittel zum Lesen von Inhalten der Speicherzellen (1) und Mittel zum Beschreiben der Speicherzellen (1) aufweist, wobei Mittel zur Bildung einer ersten Prüfinformation in Abhängigkeit von der der jeweiligen Speicherzelle (1) zugeordneten variablen Parität und dem in einer ersten Phase eines Testzyklus gelesenen Inhalt der jeweiligen Speicherzelle (1), Mittel zur Bildung einer zweiten Prüfinformation aus dem in einer zweiten Phase des Testzyklus gelesenen Inhalt unter Einbeziehung der variablen Parität und Mittel zum Vergleich der zweiten Prüfinformation mit der zu der jeweiligen Speicherzelle (1) in der ersten Phase gebildeten ersten Prüfinformation vorgesehen sind, wobei die einer Speicherzelle (1) zugeordnete variable Parität entsprechend einem Adressbit (7) der binär dargestellten Speicheradresse ausgebildet ist und **dadurch gekennzeichnet, dass** in jedem von mehreren Testzyklen jeweils ein anderes Adressbit (7) als variable Parität (VP) vorgesehen ist.

**13.** Vorrichtung nach Anspruch 12,
**dadurch gekennzeichnet,**
**dass** zum Testen von Speichern (2) mit Speicherzellen (1) auf mindestens zwei unterschiedlichen Baueinheiten Mittel zur Bildung und zum Vergleich von Signaturen (5) von Zugriffsdaten vorgesehen sind.

**14.** Vorrichtung nach einem der Ansprüche 12 oder 13,
**dadurch gekennzeichnet,**
**dass** Register (8) am Ausgang des Speichers (2) und ein FIFO (9) zur Zwischenspeicherung von Inhalten der Speicherzellen (1) und Ausgangsdaten vorgesehen sind.

**15.** Vorrichtung nach einem der Ansprüche 12 bis 14,
**dadurch gekennzeichnet,**
**dass** ein erstes Ex-Or-Gatter (66) zur Bildung eines festen Paritätsbits (69) bei Lesezugriffen auf eine Speicherzelle (1) mit einer Speicheradresse durch eine Ex-Or-Verknüpfung eines paritätsbestimmenden Adressbits (10) der jeweiligen Speicheradresse mit der ersten Prüfinformation (63) der jeweiligen Speicherzelle (1) und ein zweites Ex-OR-Gatter (67) zur Bildung der ersten Prüfinformation (70) bei Schreibzugriffen auf die Speicherzelle (1) durch eine Ex-Or-Verknüpfung des festen Paritätsbits (64) mit dem paritätsbestimmenden Adressbit (10) vorgesehen sind.

**Claims**

**1.** Method for operating and/or testing memory units (2) having storage locations (1), with which, for the storage locations (1) a first item of test information is formed according to a variable parity (VP) assigned to the respective storage location (1) and according to the content of the respective storage location (1).
**characterised in that**
in a number of test cycles

    - in a first phase in each instance

        - the content of the storage locations (1) is read in each instance,
        - for the storage locations (1) a first item of test information is formed according to a variable parameter assigned to the respective storage location (1) and according to the content of the respective storage location (1) read in the first phase,
        - the storage locations (1) are written with the content read in the first phase extended in each instance to include the first item of test information and

    - in a second phase to detect errors during the addressing process the content of the storage locations (1) is read, a second item of test information is formed from the content read in the second phase with the inclusion of the variable parameter and the second item of test information is compared with the first item of test information formed for the respective storage location (1) in the first phase.

**2.** Method according to claim 1,
**characterised in that**
at the end of a basic test cycle of a basic test the storage locations (1) are each written with the content read in the first phase.

**3.** Method according to claim 1 or 2,
**characterised in that**,
in the first phase storage locations (1) are written and read to detect errors during the write, read and store processes.

**4.** Method according to one of the preceding claims,
**characterised in that**
for testing memory units (2) having storage locations (1) one access data signature (5) is formed in each instance on at least two different units and the signatures (5) formed are compared with each other for error detection.

**5.** Method according to one of the preceding claims,
**characterised in that**
the method is used to detect coupling errors, whereby a coupling error is **characterised by** the incorrect assignment of one or more storage locations (1) to a memory unit address.

**6.** Method according to claim 8,
**characterised in that**
a different address bit (7) is used as variable parity (VP) in each test cycle to form the first item of test information.

**7.** Method according to one of the preceding claims,
**characterised in that**
in the first phase of a test cycle at each storage location (1) of the respective memory unit (2)

- an original content of the storage location (1) is read and transferred to a register (8) at the output of the memory unit (2),
- the read original content is transferred from the register (8) to a FIFO (9) and a first output data of the FIFO (9) is written into the storage location (1),
- the content of the storage location (1) is read again, transferred to the register (8) at the output of the memory unit (2) and compared with the first output data of the FIFO (9),
- the read content from the register (8) is transferred to the FIFO (9) and a second output data of the FIFO (9) is written into the storage location (1),
- the content of the storage location (1) is read again, transferred to the register (8) at the output of the memory unit (2) and compared with the second output data and
- the read content from the register (8) is transferred to the FIFO (9) and the original content from the FIFO (9) is written into the storage location (1).

**8.** Method according to one of the preceding claims,
**characterised in that**
in a first segment of a test cycle the storage locations (1) are tested in ascending order according to their memory unit addresses and in a second segment of the test cycle the storage locations (1) are tested in descending order according to their memory unit addresses.

**9.** Method according to one of the preceding claims,
**characterised in that**
in functional operation during read access to a storage location (1) with a memory unit address a fixed parity bit (69) is formed by an ex-OR operation between a parity-defining address bit (10) of the respective memory unit address to the first item of test information (63) of the respective storage location (1) and during write access to the storage location (1) the first item of test information (70) is formed by an ex-OR operation of the fixed parity bit (64) and the parity-defining address bit (10).

**10.** Method according to one of the preceding claims,
**characterised in that**
the method for testing memory units is provided within any time segments of functional operation.

**11.** Method according to one of the preceding claims,
**characterised in that**
the method is used as a build-in self test during production of a memory unit (2).

**12.** Device with memory units (2) having storage locations (1), whereby the storage locations (1) are each assigned a first item of test information according to a variable parameter assigned to the respective storage location (1) and the content of the respective storage location (1), with the device having means for reading the content of the storage locations (1) and means for writing the storage locations (1), with means being provided for forming a first item of test information according to a variable parity assigned to the respective storage location (1) and the content of the respective storage location (1) read in a first phase of a test cycle, means for forming a second item of test information from the content read in a second phase of the test cycle while including the variable parity and means for comparing the second item of test information with the first item of test information formed for the respective storage location (1) in the first phase, with the variable parity assigned to a storage location being embodied in accordance with and address bit (7) of the storage address represented in binary and **characterised in that**, in each of a number of test cycles a different address bit (7) is provided as variable parity (VP) in each case.

13. Device according to claim 12,
    **characterised in that**
    for testing memory units (2) having storage locations (1) means are provided on at least two different units for forming and comparing access data signatures (5).

14. Device according to one of claims 12 or 13,
    **characterised in that**
    registers (8) are provided at the output of the memory unit (2) and a FIFO (9) is provided to buffer storage location (1) content and output data.

15. Device according to one of claims 12 to 14,
    **characterised in that**
    a first ex-OR gate (66) is provided to form a fixed parity bit (69) during read access to a storage location (1) with a memory unit address by means of an ex-OR operation between a parity-defining address bit (10) of the respective memory unit address to the first item of test information (63) of the respective storage location and a second ex-OR gate is provided to form the first item of test information (70) during write access to the storage location (1) by means of an ex-OR operation between the fixed parity bit (64) and the parity-defining address bit (10).

## Revendications

1. Procédé d'exploitation et/ou de test de mémoires (2) comportant des cellules de mémoire (1), dans lequel on forme pour les cellules de mémoire (1) à chaque fois une première information de test en fonction d'une parité variable (VP) associée à la cellule de mémoire respective (1) et d'un contenu de la cellule de mémoire respective (1),
   **caractérisé par le fait que**,
   en plusieurs cycles,

   - à chaque fois, dans une première phase,

     - on lit à chaque fois un contenu des cellules de mémoire (1),
     - on forme pour les cellules de mémoire (1) à chaque fois une première information de test en fonction d'une parité variable associée à la cellule de mémoire respective (1) et du contenu, lu dans la première phase, de la cellule de mémoire respective (1),
     - on écrit dans les cellules de mémoire (1) à chaque fois le contenu lu dans la première phase et complété avec la première information de test, et

   - à chaque fois, dans une deuxième phase, pour la détection d'erreurs lors de l'opération d'adressage, on lit le contenu des cellules de mémoire (1), on forme une deuxième information de test à partir du contenu lu dans la deuxième phase en incluant la parité variable et on compare la deuxième information de test à la première information de test formée dans la première phase pour la cellule de mémoire respective (1),

   dans lequel il est prévu un nombre de cycles de test correspondant au nombre de bits d'adresse (7) d'une adresse de mémoire représentée sous forme binaire et, dans chaque cycle de test, on utilise à chaque fois un autre bit d'adresse (7) pour la variation de la parité variable.

2. Procédé selon la revendication 1,
   **caractérisé par le fait que**, à la fin d'un cycle d'un test de base, on écrit dans les cellules de mémoire (1) à chaque fois le contenu lu dans la première phase.

3. Procédé selon la revendication 1 ou 2,
   **caractérisé par le fait que**, dans la première phase, on écrit et lit dans des cellules de mémoire (1) pour la détection d'erreurs lors des opérations écriture, lecture et mémorisation.

4. Procédé selon l'une des revendications précédentes,
   **caractérisé par le fait que**, pour tester des mémoires (2) comportant des cellules de mémoire (1) sur au moins deux modules différents, on forme à chaque fois une signature (5) de données d'accès et on compare les signatures formées (5) pour la détection d'erreurs.

5. Procédé selon l'une des revendications précédentes, **caractérisé par le fait que** l'on utilise le procédé pour la détection d'erreurs de couplage, une erreur de couplage étant **caractérisée par** l'association erronée d'une ou plusieurs cellules de mémoire (1) à une adresse de mémoire.

6. Procédé selon l'une des revendications précédentes, **caractérisé par le fait que**, dans chaque cycle de test, on utilise à chaque fois un autre bit d'adresse (7) comme parité variable (VP) pour la formation de la première information de test.

7. Procédé selon l'une des revendications précédentes, **caractérisé par le fait que**, dans la première phase d'un cycle de test, pour chaque cellule de mémoire (1) de la mémoire (2),

   - on lit un contenu initial de la cellule de mémoire (1) et on le transfère dans un registre (8) à la sortie de la mémoire (2),
   - on transfère le contenu initial lu du registre (8) à une FIFO (9) et on écrit une première donnée de sortie de la FIFO (9) dans la cellule de mémoire (1),
   - on lit à nouveau le contenu de la cellule de mémoire (1), on le transfère dans le registre (8) à la sortie de la mémoire (2) et on le compare à la première donnée de sortie de la FIFO (9),
   - on transfère le contenu lu du registre (8) à la FIFO (9) et on écrit une deuxième donnée de sortie de la FIFO (9) dans la cellule de mémoire (1),
   - on lit à nouveau le contenu de la cellule de mémoire (1), on le transfère dans le registre (8) à la sortie de la mémoire (2) et on le compare à la deuxième donnée de sortie, et
   - on transfère le contenu lu du registre (8) à la FIFO (9) et on écrit le contenu initial issu de la FIFO (9) dans la cellule de mémoire (1).

8. Procédé selon l'une des revendications précédentes, **caractérisé par le fait que**, dans une première partie d'un cycle de test, on teste les cellules de mémoire (1) en les prenant dans l'ordre croissant de leurs adresses de mémoire et, dans une deuxième partie du cycle de test, on teste les cellules de mémoire (1) en les prenant dans l'ordre décroissant de leurs adresses de mémoire.

9. Procédé selon l'une des revendications précédentes, **caractérisé par le fait que**, dans le cas d'une exploitation fonctionnelle, lors d'accès en lecture à une cellule de mémoire (1) avec une adresse de mémoire, on forme un bit de parité fixe (69) au moyen d'une combinaison OU-EXCLUSIF d'un bit d'adresse (10), déterminant la parité, de l'adresse de mémoire respective avec la première information de test (63) de la cellule de mémoire respective (1) et, lors d'accès en écriture à la cellule de mémoire (1), on forme la première information de test (70) au moyen d'une combinaison OU-EXCLUSIF du bit de parité fixe (64) avec le bit d'adresse (10) déterminant la parité.

10. Procédé selon l'une des revendications précédentes, **caractérisé par le fait que** le procédé est prévu pour tester des mémoires à l'intérieur de segments temporels quelconques de l'exploitation fonctionnelle.

11. Procédé selon l'une des revendications précédentes, **caractérisé par le fait que** le procédé est utilisé comme test automatique intrinsèque dit Build-In Self Test lors d'une production d'une mémoire (2).

12. Dispositif comportant des mémoires (2) ayant des cellules de mémoire (1), dans lequel il est associé aux cellules de mémoire (1) à chaque fois une première information de test en fonction d'une parité variable associée à la cellule de mémoire respective (1) et d'un contenu de la cellule de mémoire respective (1), le dispositif comportant des moyens pour lire des contenus des cellules de mémoire (1) et des moyens pour écrire dans les cellules de mémoire (1), des moyens étant prévus pour la formation d'une première information de test en fonction de la parité variable associée à la cellule de mémoire respective (1) et du contenu, lu dans une première phase d'un cycle de test, de la cellule de mémoire respective (1), des moyens étant prévus pour la formation d'une deuxième information de test à partir du contenu lu dans une deuxième phase du cycle de test en incluant la parité variable, des moyens étant prévus pour la comparaison de la deuxième information de test à la première information de test formée pour la cellule de mémoire respective (1) dans la première phase, la parité variable associée à une cellule de mémoire (1) étant conçue en fonction d'un bit d'adresse (7) de l'adresse de mémoire représentée sous forme binaire, **caractérisé par le fait que**, dans chacun des cycles de test, il est prévu à chaque fois un autre bit d'adresse (7) comme parité variable (VP).

13. Dispositif selon la revendication 12,
**caractérisé par le fait que**, pour tester des mémoires (2) comportant des cellules de mémoire (1) sur au moins deux modules différents, des moyens sont prévus pour la formation et pour la comparaison de signatures (5) de données d'accès.

14. Dispositif selon l'une des revendications 12 ou 13,
**caractérisé par le fait qu'**il est prévu des registres (8) à la sortie de la mémoire (2) et une FIFO (9) pour la mémorisation temporaire de contenus des cellules de mémoire (1) et de données de sortie.

15. Dispositif selon l'une des revendications 12 à 14,
**caractérisé par le fait qu'**il est prévu une première porte OU-EXCLUSIF (66) pour la formation d'un bit de parité fixe (69) lors d'accès en lecture à une cellule de mémoire (1) avec une adresse de mémoire au moyen d'une combinaison OU-EXCLUSIF d'un bit d'adresse (10), déterminant la parité, de l'adresse de mémoire respective avec la première information de test (63) de la cellule de mémoire respective (1) et une deuxième porte OU-EXCLUSIF (67) pour la formation de la première information de test (70) lors d'accès en écriture à la cellule de mémoire (1) au moyen d'une combinaison OU-EXCLUSIF du bit de parité fixe (64) avec le bit d'adresse (10) déterminant la parité.

FIG 1

FIG 2

FIG 3

FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10037992
- WO 9809218 A